# EUROPÄISCHE PATENTSCHRIFT

(11) **EP 1 425 152 B1**
(45) Veröffentlichungstag und Bekanntmachung des Hinweises auf die Patenterteilung: **21.09.2005**
(21) Anmeldenummer: 00969545.3
(22) Anmeldetag: 25.10.2000
(51) Int. Cl.: B29C 47/60, C23C 4/08

(54) **SCHNECKE FÜR KUNSTSTOFFVERARBEITUNGSMASCHINEN**
SCREW FOR MACHINES FOR PROCESSING PLASTIC
VIS DE MACHINE DE TRANSFORMATION DES PLASTIQUES

(30) Priorität: 17.11.1999 DE 19955485
(43) Veröffentlichungstag der Anmeldung: 09.06.2004
(73) Patentinhaber: Krauss-Maffei Kunststofftechnik GmbH, 80997 München (DE)
(72) Erfinder: HABERER, Achim, 85258 Ebersbach/Weichs (DE)
(74) Vertreter: Zollner, Richard
(86) Internationale Anmeldenummer: PCT/EP2000/010488
(87) Internationale Veröffentlichungsnummer: WO 2001/036177

(56) Entgegenhaltungen:
- CH-A- 669 212
- DE-A- 3 638 088
- DE-A- 3 718 779
- COGLIATI G: "GRUPPI DI PLASTIFICAZIONE: TECNOLOGIE PER ALLUNGARNE LA VITA" INTERPLASTICS,IT,TECHNIQUE NUOVE. MILAN, Bd. 20, Nr. 8, 1. November 1997 (1997-11-01), Seiten 80-84, XP000724044 ISSN: 0392-3800

## Beschreibung

Die Erfindung betrifft eine Schnecke für Kunststoffverarbeitungsmaschinen gemäß Oberbegriff des Patentanspruchs 1.

Die Erfindung betrifft ferner gemäß Oberbegriff des Patentanspruchs 6 ein Verfahren zur Regenerierung einer derartigen Schnecke.

Zur Regenerierung von durch Verschleiß unbrauchbar gewordenen Extruderschnecken ist es üblich, die verschlissenen Schneckenstege auf einen einheitlichen Referenzdurchmesser abzuschleifen und anschließend eine neue Beschichtung aufzubauen, die dem Solimaß bzw. den Maßen einer neuen Schnecke entspricht und auf der Kopfbahn der Schneckenstege die erforderliche Verschleißschutzschicht aufweist.

In der Regel wird eine Extruderschnecke unbrauchbar bzw. muss regeneriert werden, wenn durch Verschleiß eine Reduzierung im Durchmesser von ca. 2 mm eingetreten ist. Bei einem bekannten Regenerierverfahren werden zunächst die Schneckenstege auf einen einheitlichen Referenzdurchmesser abgeschliffen und in einem anschließenden Auftragsschweißvorgang mit einer Pufferschicht belegt, die im wesentlichen die aufgrund von Verschleiß und Abtragung reduzierten Stegbereiche wieder ersetzt.
Die Oberfläche der aufgeschweißten Pufferschicht wird überschliffen und anschließend mittels eines thermischen Spritzverfahrens mit einer Verschleißschutzschicht belegt. Durch die im Auftragsschweißverfahren aufgebrachte Schmelze wird das Grundmaterial der Schnecke einer hohen thermischen Belastung ausgesetzt, die die Schichthaftfestigkeit beeinträchtigende Gefügeveränderungen und die Bildung von Rissen zur Folge haben kann. Im weiteren besteht die Gefahr, dass sich die Schnecke verzieht und die Rundlaufgenauigkeit beeinträchtigt wird. Bei dem erforderlichen Richtvorgang ergibt sich ein weiteres Risiko der Bildung von Rissen. Ferner ergibt sich bei Schnecken, deren Schneckengänge verchromt sind, das Problem, dass sich die Chromschicht an der Schneckenflanke im Bereich des Schmelzeauftrags löst.

Aufgabe der Erfindung ist es, mit einfachen Mitteln eine regenerierte Extruderschnecke zu schaffen, die bei hoher Belastbarkeit eine lange Betriebsdauer aufweist. Der Erfindung liegt ferner die Aufgabe zugrunde, ein Verfahren zur Herstellung einer derartigen regenerierten Extruderschnecke anzugeben.

Aus der CH 669212 ist ein Verfahren zur Herstellung einer Extruderschnecke bekannt, bei dem sowohl der Schneckengrund als auch die Schneckenstege und eine verschleißfeste Materialschicht ausschließlich aus einzelnen Metalllagen mit thermischer Beschichtungstechnik aufgebaut werden. Bei diesem Verfahren steht der geometrische Aufbau der Schneckenstege im Vordergrund, wobei keine Maßnahmen aufgezeigt sind, wie bei einem aus einem einheitlichen Grundmaterial bestehenden, die Schneckenstege einschließenden Schneckengrundkörper die Schnecke nach Verschleiß wieder so regeneriert werden kann, dass eine verschleißmindernde Auflage ablösesicher mit dem Grundmaterial verbunden werden kann.

Die Lösung der Aufgabe ist in Anspruch 1 angegeben, die Unteransprüche beziehen sich auf bevorzugte Ausgestaltungen der Schnecke bzw. des Herstellungsverfahrens.

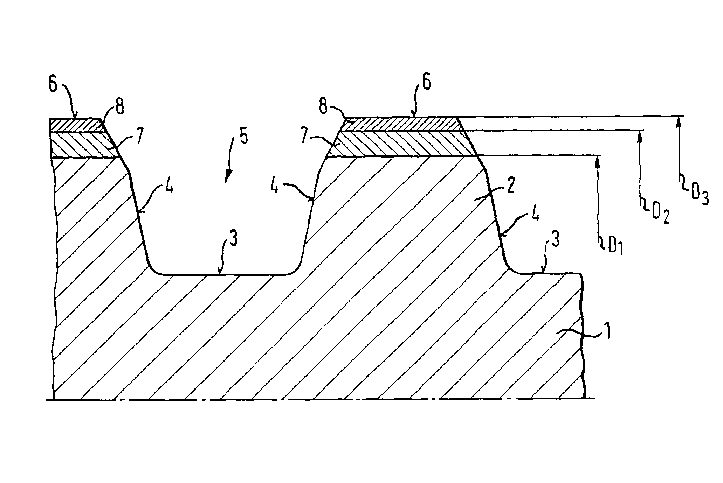

Die Erfindung wird im folgenden anhand eines Beispiels näher erläutert. Es wird auf die Zeichnung Bezug genommen, die schematisch einen Querschnitt durch den Schneckensteg einer zylindrischen Schnecke zeigt.

In der Zeichnung ist mit 1 das Grundmaterial der Schnecke und mit 2 der schraubenförmige Schneckensteg bezeichnet. Die Schneckenflanken 4 und der Schneckengrund 3 bilden den Schneckengang 5, der in der Regel mit einer Chromschicht (nicht dargestellt) belegt ist. Die Außenfläche des Schneckensteges 2 bildet dessen Kopfbahn 6.

In der Kopfbahn 6 der Schnecke befinden sich eine mit dem Grundmaterial der Schnecke verbundene Pufferschicht 7 aus 13%igem Chromstahl, an die sich die verschleißmindernde Auflage 8 aus 99%igem Molybdän anschließt. Die Dicke der Pufferschicht 7 beträgt ca. 1 mm und die der Auflage 8 ca. 0,4 mm.

Zum Regenerieren einer durch Verschleiß unbrauchbar gewordenen Schnecke wird der Schneckensteg 2 durch Schleifen auf einen einheitlichen Durchmesser D ₁ abgetragen, worauf die abgeschliffene Oberfläche mittels eines Strahlverfahrens aufgeraut wird. Anschließend wird auf die aufgeraute Oberfläche mittels eines Drahtflammspritzverfahrens in einer oder mehreren Lagen die Pufferschicht 7 in einer Dicke von ca. 1 mm bis zum Durchmesser D ₂ aufgetragen. Im weiteren wird auf die unbearbeitete Oberfläche der Pufferschicht 7 ebenfalls mittels eines Drahtflammspritzverfahrens die verschleißmindernde Auflage 8 aufgebracht und anschließend auf den Enddurchmesser D ₃ der fertig regenerierten Schnecke überschliffen.

Die Pufferschicht 7 kann in der Dicke im Bereich zwischen 0,1 und 1,2 mm variieren. Mit der Pufferschicht 7 wird im wesentlichen die durch Verschleiß und durch den Abschleifvorgang eingetretene Durchmesserreduzierung ausgeglichen. Die verschleißmindernde Auflage 8 hat ihre optimale Dicke im Bereich von 0,4 mm. Die Dicke der Auflage kann bei der Herstellung bzw. Regenerierung der Schnecke und nach bestimmten Betriebsintervallen mit einem magnetischen Dickemessgerät ermittelt werden, das den Abstand von der Oberfläche der nichtmagnetischen Auflage 8 zur Oberfläche der Pufferschicht 7 aus magnetisch leitendem Werkstoff präzise erfasst.

Die Belegung der Pufferschicht 7 mit der Auflage 8 mittels eines thermischen Spritzverfahrens, wie dem Drahtflammspritzen, erfordert keine Maßnahmen zum Aufrauen der Pufferschichtoberfläche, da das Gefüge der mittels eines thermischen Spritzverfahrens aufgebrachten Pufferschicht porös ist und eine derart raue Oberfläche aufweist, dass sich die aufgespritzten Teilchen der Auflage 8 durch mechanische Verklammerung fest mit der Pufferschicht 7 verbinden.

Im Gegensatz hierzu ist es bei der Aufbringung einer Pufferschicht mittels eines Auftragsschweißverfahrens notwendig, die Pufferschicht zu überschleifen und anschließend in einem Strahlverfahren aufzurauen.

Die Erfindung wurde anhand der Regenerierung einer zylindrischen Schnecke erläutert, sie ist jedoch in gleicher Weise auch bei einer konischen Schnecke durchführbar.

### Bezugszeichenliste

- 1.: 1. Grundmaterial
- 2.: Schneckensteg
- 3.: Schneckenflanke
- 4.: Schneckenflanke
- 5.: Schneckengrund
- 6.: Kopfbahn
- 7.: Pufferschicht
- 8.: Auflage

## Patentansprüche

1. Schnecke für Kunststoffverarbeitungsmaschinen, insbesondere Extruderschnecke, bestehend aus dem Grundmaterial einer durch Verschleiß unbrauchbar gewordenen Schnecke und einer die Schnecke regenerierenden, auf die Kopfbahn des Schneckensteges aufgebrachten verschleißmindernden Auflage aus Molybdän oder einer molybdänhaltigen Legierung, **dadurch gekennzeichnet, dass** zwischen dem Grundmaterial (1) und der Auflage (8) eine ein- oder mehrlagige Pufferschicht (7) aus einem magnetisch leitenden metallischen Werkstoff angeordnet ist, wobei die Pufferschicht (7) auf das Grundmaterial (1) und die verschleißmindernde Auflage (8) auf die Pufferschicht (7) jeweils mittels eines thermischen Spritzverfahrens aufgebracht sind.

2. Extruderschnecke nach Anspruch 1, **dadurch gekennzeichnet, dass** die Pufferschicht (7) aus einem Chromstahl mit einem Gehalt an Cr von 10 bis 16 %, vorzugsweise 13 % besteht.

3. Extruderschnecke nach Anspruch 1 oder 2, **dadurch gekennzeichnet, dass** der Gehalt an Molybdän in der Auflage (8) mindestens bei 30 % beträgt.

4. Extruderschnecke nach Anspruch 3, **dadurch gekennzeichnet, dass** die Auflage (8) zu nahezu 100 % aus Molybdän besteht.

5. Extruderschnecke nach einem der Ansprüche 1 bis 3, **dadurch gekennzeichnet, dass** die Dicke der Pufferschicht (7) im Bereich von 0,1 bis 1,2 mm und die Dicke der molybdänhaltigen Auflage (8) im Bereich von 0,3 bis 0,5, vorzugsweise bei 0,4 mm liegt.

6. Verfahren zur Regenerierung einer durch Verschleiß unbrauchbar gewordenen Extruderschnecke nach mindestens einem der Ansprüche 1 bis 5, bei dem auf die Kopfbahn (6) des Schneckensteges (2) der Extruderschnecke eine verschleißmindernde Auflage (8) aus Molybdän oder einer molybdänhaltigen Legierung aufgebracht wird, **dadurch gekennzeichnet, dass** das Grundmaterial (1) an der Kopfbahn (6) der Schneckenstege (2) auf einen einheitlichen Durchmesser abgetragen wird, dass anschließend auf die Kopfbahn (6) eine ein- oder mehrlagige Pufferschicht (7) aus einem magnetisch leitenden metallischen Werkstoff in einer Dicke aufgebracht wird, die der Durchmesserreduzierung der Extruderschnecke aufgrund von Verschleiß und aufgrund der Abtragung auf einen einheitlichen Durchmesser im wesentlichen entspricht und dass auf die Pufferschicht (7) die verschleißmindernde Auflage (8) aus Molybdän oder einer molybdänhaltigen Legierung mittels thermischer Spritzverfahren aufgebracht wird.

7. Verfahren nach Anspruch 6, **dadurch gekennzeichnet, dass** die Oberfläche des abgetragenen Grundmaterials (1) der Extruderschnecke durch Strahlbehandlung aufgeraut wird.

8. Verfahren nach mindestens einem der Ansprüche 6-8, **dadurch gekennzeichnet, dass** als thermisches Spritzverfahren zur Aufbringung der Pufferschicht (7) und/oder der verschleißmindernden Auflage (8) ein Drahtflammspritzverfahren angewendet wird.

## Claims

1. Screw for machines for processing plastic, in particular an extruder screw, comprising the base material of a screw that has become unusable due to wear and a wear-reducing overlayer made of molybdenum or a molybdenum containing alloy which regenerates the screw and is applied to the head track of the screw web, **characterised in that** between the base material (1) and the overlayer (8) a single or multi-layered buffer layer (7) made of a magnetically conducting metal material is provided, whereby the buffer layer (7) is applied to the base material (1) and the wear-reducing overlayer (8) to the buffer layer (7) by means of a thermal injection process.

2. Extruder screw according to claim 1, **characterised in that** the buffer layer (7) is made from a chromium steel with a Cr content of 10 to 16 %, preferably 13 %.

3. Extruder screw according to claim 1 or 2, **characterised in that** the content of molybdenum in the overlayer (8) is at least 30%.

4. Extruder screw according to claim 3, **characterised in that** the overlayer (8) comprises almost 100% molybdenum.

5. Extruder screw according to one of claims 1 to 3, **characterised in that** the thickness of the buffer layer (7) is in the region of 0.1 to 1.2 mm and the thickness of the molybdenum-containing overlayer (8) is in the region of 0.3 to 0.5, preferably 0.4 mm

6. Method for regenerating an extruder screw that has become unusable due to wear according to at least one of claims 1 to 5, in which a wear-reducing overlayer (8) made of molybdenum or a molybdenum-containing alloy is applied to the head track (6) of the screw web (2) of the extruder screw, **characterised in that** the base material (1) on the head track (6) of the screw webs (2) is removed up to a uniform diameter, **in that** afterwards a single or multilayered buffer layer (7) made of a magnetically conducting metal material is applied to the head track (6) to a thickness which corresponds to the reduction in diameter of the extruder screw caused by wear and due to abrasion up to a uniform diameter, and **in that** the wear-reducing overlayer (8) made of molybdenum or a molybdenum-containing alloy is applied onto the buffer layer (7) by means of a thermal injection process.

7. Method according to claim 6, **characterised in that** the surface of the abraded base material (1) of the extruder screw is roughened in a blasting procedure.

8. Method according to at least one of claims 6-8, **characterised in that** as a thermal injection process for applying the buffer layer (7) and/or the wear-reducing overlayer (8) a wire flame spraying process is used.

## Revendications

1. Vis pour machines de transformation des matières plastiques, en particulier vis d'extrudeuse, composée du matériau de base d'une vis devenue inutilisable du fait de l'usure et d'un revêtement en molybdène ou en alliage contenant du molybdène régénérateur de la vis, appliqué sur le cercle d'échanfreinement de la nervure de vis et réduisant l'usure, **caractérisée en ce qu'**une couche tampon (7) simple ou multiple en matériau métallique magnétique est disposée entre le matériau de base (1) et le revêtement (8), la couche tampon (7) étant appliquée sur le matériau de base (1) et le revêtement réduisant l'usure (8) sur la couche tampon (7), respectivement par un procédé d'injection thermique.

2. Vis d'extrudeuse selon la revendication 1, **caractérisée en ce que** la couche tampon (7) est composée d'un acier chromé avec une teneur en Cr de 10 à 16 %, de préférence de 13 %.

3. Vis d'extrudeuse selon la revendication 1 ou 2, **caractérisée en ce que** la teneur en molybdène dans le revêtement (8) est de 30 % minimum.

4. Vis d'extrudeuse selon la revendication 3, **caractérisée en ce que** le revêtement (8) est composé à presque 100 % de molybdène.

5. Vis d'extrudeuse selon une des revendications 1 à 3, **caractérisée en ce que** l'épaisseur de la couche tampon (7) se situe dans la plage de 0,1 à 1,2 mm et l'épaisseur du revêtement contenant du molybdène (8) dans la plage de 0,3 à 0,5 mm, de préférence est de 0,4 mm.

6. Procédé de régénération d'une vis d'extrudeuse devenue inutilisable du fait de l'usure selon au moins une des revendications 1 à 5, dans lequel un revêtement (8) réduisant l'usure en molybdène ou en alliage contenant du molybdène est appliqué le cercle d'échanfreinement(6)de la nervure de la vis (2) d'extrudeuse, **caractérisé en ce que** le matériau de base (1) sur le cercle d'échanfreinement (6) des nervures de la vis (2) est enlevé jusqu'à l'obtention d'un diamètre uniforme, **en ce qu'**ensuite une couche tampon simple ou multiple (7) en matériau métallique magnétique est appliquée sur le cercle d'échanfreinement (6) avec une épaisseur qui correspond pour l'essentiel à la réduction de diamètre de la vis d'extrudeuse en raison de l'usure et en raison de l'enlèvement jusqu'à l'obtention d'un diamètre uniforme, et **en ce que** le revêtement réduisant l'usure (8) en molybdène ou en alliage contenant du molybdène est appliqué sur la couche tampon (7) par des procédés d'injection thermique.

7. Procédé selon la revendication 6, **caractérisé en ce que** la surface du matériau de base enlevé (1) de la vis d'extrudeuse est rendue rugueuse par grenaillage.

8. Procédé selon au moins une des revendications 6 à 8, **caractérisé en ce que** le procédé d'injection thermique utilisé pour appliquer la couche tampon (7) et/ou le revêtement réduisant l'usure (8) est un procédé d'injection thermique flamme-fil.
